# EUROPEAN PATENT APPLICATION

(11) **EP 4 464 155 A1**
(43) Date of publication of application: **20.11.2024**
(21) Application number: 23737251.1
(22) Date of filing: 10.01.2023
(51) Int. Cl.: A01K 61/00, A01K 61/10, A01K 61/60, A01K 63/00, A01K 63/04

(54) **SELF-CONTAINED SYSTEM FOR GENERATING AND SUPPLYING OXYGEN, ASSOCIATED METHOD AND USE**

(30) Priority: 10.01.2022 CL 20220056; 09.12.2022 WO PCT/IB2022/062013
(71) Applicant: Oxzo S.A., Puerto Montt, 5501619 (CL)
(72) Inventor: MARCUS DEL CAMPO, John Robert, Puerto Montt (CL)
(74) Representative: Clarke, Modet y Cía., S.L.
(86) International application number: PCT/IB2023/050223
(87) International publication number: WO 2023/131931

(57) **Abstract**

The invention relates to a self-contained system comprising a floating platform which contains a subsystem for generating an oxygen-containing gas; a self-contained power supply subsystem; control means; and means for mixing and dissolving the oxygen-containing gas in water; the system further comprising: a line for supplying water mixed with gas; and means for supplying water mixed with gas that provide a laminar flow in the bottom layer of a body of water, preventing the resuspension of sediment.

## Description

### Technical field of the invention

The present technology relates to the aquaculture industry, specifically in technologies associated with oxygenation systems and methods, and in particular provides an autonomous oxygen generation and supply system, a method, and a use of the system.

### Background of the invention

In the field of aquaculture, systems, and methods to provide oxygen in different layers of a body of water are becoming more and more common. The provision of oxygen has beneficial effects both for the species under cultivation and for the environment in which an aquaculture facility is located.

CL 202100448 discloses a system and method for injecting controlled flows of gases, such as oxygen and air, into pools and fish culture facilities. The solution proposed therein allows measuring and controlling the flow of oxygen provided in the aquaculture system. However, the technology described therein only allows control of oxygenation in response to an oxygen measurement in the aquaculture system but does not allow control in response to a water current. In addition, the system described therein only allows the provision of oxygen in pools or aquaculture centers, which are not located in bodies of water.

CL 202100912 discloses a method for injecting nanobubbles into the bottom layer of a water column. This document additionally discloses the consideration of the currents present in the body of water. However, the technology described therein does not allow a dynamic control of oxygenation in an aquaculture system, since the arrangement and operation of the diffusers are fixed and are established after a mathematical modeling of the body of water, as well as its currents.

Patent CL 48712, by the same applicant as the present application, discloses a portable system for on-site oxygen generation and injection of oxygen at industrial levels for fish cages at sea comprising a floating pontoon-type platform, where inside said pontoon it has: a system that generates oxygen at 93-95 % purity; and an electricity generating and distribution system, which provides electrical power to the components of said oxygen generating system. The oxygen generating system comprises pressurized air generators, pressurized oxygen generating means, high-pressure oxygen compression and accumulation means, as well as oxygen generation system control means.

However, none of the prior art documents provide a system or method that allows the provision of large amounts of oxygen in a lower layer of a body of water in remote locations, autonomously and without generating resuspension of sediment.

Consequently, a system, method, and use are required to overcome the shortcomings of the prior art.

### Summary of the invention

A first object of the present invention provides an autonomous system for generating and supplying oxygen in at least one layer of a body of water in remote locations and preventing resuspension of sediment from a bottom of the body of water, comprising: a floating platform, wherein said floating platform contains: a subsystem for generating an oxygen-containing gas; an autonomous electricity supply subsystem operatively connected to the gas generation subsystem; and control means operatively connected to the gas generation subsystem and the autonomous electricity supply subsystem, characterized in that the floating platform additionally contains: means for mixing and dissolving oxygen-containing gas in water, having a gas inlet operatively connected to a gas outlet of the gas generation subsystem, a water inlet operatively connected to a water source, and a gas-mixed water outlet; wherein, additionally, the control means are operatively connected to the gas mixing and dissolving means; wherein the system additionally comprises: a gas-mixed water supply line operatively connected to the gas-mixed water outlet of the mixing and dissolving means, said supply line extending from the floating platform to a bottom layer of the body of water; and gas-mixed water supply means operatively connected to the supply line, wherein said supply means provide a laminar flow of gas-mixed water into the bottom layer of the body of water, preventing resuspension of sediment from the bottom of the body of water.

A second object of the present invention provides a method for autonomously generating and supplying oxygen in a lower layer of a body of water, in remote locations and avoiding resuspension of sediment from a bottom of the body of water, characterized in that it comprises the steps of: providing an autonomous oxygen generation and supply system comprising: a floating platform, wherein said floating platform contains: a subsystem for generating an oxygen-containing gas; an autonomous electricity supply subsystem operatively connected to the gas generation subsystem; and control means operatively connected to the gas generation subsystem and the autonomous electricity supply subsystem, means for mixing and dissolving the oxygen-containing gas in water, having a gas inlet operatively connected to a gas outlet of the gas generation subsystem, a water inlet operatively connected to a water source, and a gas-mixed water outlet; wherein the control means are additionally operatively connected to the gas mixing and dissolving means; a gas-mixed water supply line operatively connected with the gas-mixed water outlet of the mixing and dissolving means, said supply line extending from the floating platform to the bottom layer of the body of water; and gas-mixed water supply means operatively connected with the supply line; generating the oxygen-containing gas by means of the gas generation subsystem; generating a mixture of water with the oxygen-containing gas by the mixing and dissolving means; and supplying gas-mixed water by the supply means, wherein said supply means provide a laminar flow of gas-mixed water into the lower layer of the body of water, preventing resuspension of sediment from the bottom of the body of water.

A third object of the present invention provides a use of an autonomous oxygen generation and supply system, which is characterized in that it serves to supply oxygen and/or air to different depths of the body of water.

### Brief description of the figures

Fig. 1 schematically illustrates a first embodiment of the system which is the subject of the present invention.
Fig. 2 schematically illustrates a block diagram of a first portion of a first embodiment of the system which is the subject of the present invention.
Fig. 3 illustrates a first schematic plan view of a first embodiment of the floating platform forming part of the system which is the subject of the present invention.
Fig. 4 illustrates a second schematic plan view of a first embodiment of the floating platform forming part of the system which is the subject of the present invention.

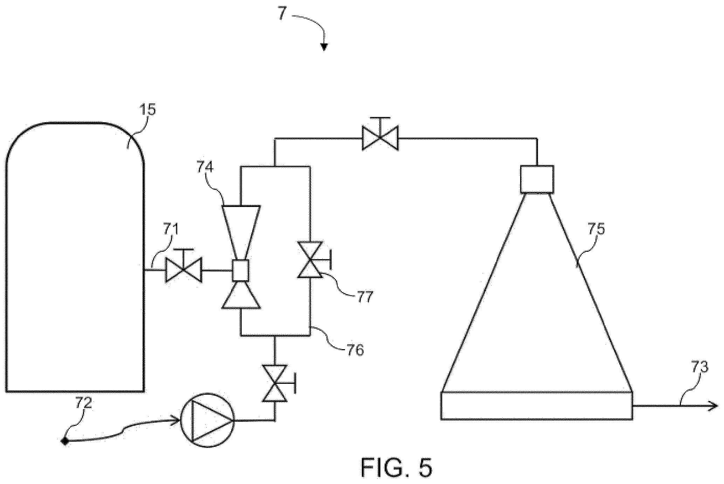

Fig. 5 illustrates a schematic diagram of a first embodiment of the mixing and dissolving means forming part of the system which is the subject of the present invention.
Fig. 6 illustrates a perspective view of a first embodiment of a diffuser forming part of the supply means that are part of the system which is the subject of the present invention.
Fig. 7 illustrates a schematic diagram of a second portion of a first embodiment of the system which is the subject of the present invention.
Fig. 8 illustrates a first isometric schematic view of an example of an embodiment of the floating platform forming part of the system which is the subject of the present invention.

### Detailed description of the invention

Below, the present invention will be described in detail, referring for this purpose to the figures accompanying the present application.

A first object of the present invention provides an autonomous system (1) for generating and supplying oxygen in at least one layer (21, 22, 23) of a body of water (2), at remote locations and preventing resuspension of sediment from a bottom (24) of the body of water (2), comprising:
- a floating platform (3), wherein said floating platform (3) contains:
   - a subsystem for generating (4) an oxygen-containing gas;
   - an autonomous electricity supply subsystem (5) operatively connected to the gas generation subsystem (4); and
   - control means (6) operatively connected to the gas generation subsystem (4) and to the autonomous electricity supply subsystem,

wherein the floating platform (3) additionally contains:
   - means for mixing and dissolving (7) oxygen-containing gas in water, having a gas inlet (71) operatively connected with a gas outlet (41) of the gas generation subsystem (4), a water inlet (72) operatively connected with a water source, and a gas-mixed water outlet (73);
   - wherein the control means (6) are additionally operatively connected to the gas mixing and dissolving means (7);
wherein the system (1) further comprises:
   - a supply line (8) of gas-mixed water, operatively connected with the gas-mixed water outlet (73) of the mixing and dissolving means (7), said supply line (8) extending from the floating platform (3) to a lower layer (21) of the body of water (2); and
   - gas-mixed water supply means (9) operatively connected with the supply line (8), wherein said supply means (9) provide a laminar flow of gas-mixed water in the lower layer (21) of the body of water (2), preventing the resuspension of sediment from the bottom (24) of the body of water (2).

In the context of the present invention, the expression "at least one" should be understood to mean one or more of the elements referred to. The number of elements does not limit the scope of the present invention and will depend on the specific application of the system (1) which is the subject of the present invention. Furthermore, in case more than one element is provided, said referred elements may or may not be identical to each other without limiting the scope of the present invention.

In the context of the present invention, the term "plurality" is to be understood as meaning two or more of the elements referred to. The number of elements forming part of said plurality does not limit the scope of the present invention and will depend on the specific application of the system which is the subject of the present invention. Furthermore, the elements forming part of the plurality may or may not be identical to each other without limiting the scope of the present invention.

In the context of the present invention, without limiting the scope thereof, relative directions such as up, down, left, right, forward, backward, and the like shall be understood as referring to the system (1) when the system is normally in use. In this sense, for example, and without limiting the scope of the present invention, the vertical line, the up and down directions, or the depths within the body of water (2) will be defined by the direction of the gravity acceleration, while the horizontal, or substantially horizontal, directions will be defined by a plane perpendicular to said vertical direction. Furthermore, the inward and outward orientations will be defined, without limiting the scope of the present invention, by a set or subset of edges of the body of water (2) in which the system (1) which is the subject of the present invention is used.

In the context of the present invention, without limiting the scope thereof, an operative connection between two elements and/or subsystems will be understood as a connection that allows an interaction, or an exchange of energy and/or matter, for example, one or more fluids, between said elements and/or subsystems. For example, and without limiting the scope of the present invention, the autonomous electricity supply subsystem (5) is operatively connected to other elements of the system (1) when said autonomous electricity supply subsystem (5) can provide electricity to said other elements. In another example, and without limiting the scope of the present invention, the mixing and dissolving means (7), or parts thereof, are operatively connected with other elements of the system (1) when the flow of fluid between the mixing and dissolving means (7), or parts thereof, and said other elements of the system (1) is at least partially permitted. The means by which such an operative connection between two elements and/or subsystems is provided do not limit the scope of the present invention and any option known to a person of ordinary skill in the art may be used.

In the context of the present invention, without limiting the scope of the present invention, a body of water will be understood as an expanse of water that is found by the earth's surface and whose area and/or volume is greater than a certain threshold. For example, and without limiting the scope of the present invention, it will be understood that said body of water possesses an area greater than 10,000 square meters, more preferably greater than 500,000 square meters and even more preferably greater than 1 square kilometer, or a volume greater than 100,000 cubic meters, more preferably greater than 5,000,000 cubic meters, and even more preferably greater than 1 cubic kilometer. Examples of bodies of water may include, but are not limited to, parts or all of lakes, lagoons, bays, seas, oceans, rivers, estuaries, straits or gulfs. Commonly, bodies of water have currents within them that promote exchanges of both temperature and matter within the body of water.

In the context of the present invention, without limiting the scope thereof, it will be understood as the bottom layer (21) of said body of water (2) a layer of water whose distance from the bottom (24) of said body of water (2) is less than a certain threshold value. For example, and without limiting the scope of the present invention, said bottom layer (21) may possess a distance from the bottom of said body of water (2) of less than 12 meters, more preferably less than 10 meters, and even more preferably less than 8 meters.

In the context of the present invention, without limiting the scope thereof, it will be understood as the surface layer (23) of said body of water (2) a layer of water whose distance from the surface of said body of water (2) is less than a certain threshold value. For example, and without limiting the scope of the present invention, said surface layer (23) may possess a distance from the surface of said body of water (2) of less than 10 meters, more preferably less than 8 meters, and even more preferably less than 5 meters.

In the context of the present invention, without limiting the scope thereof, it will be understood as intermediate layer (21) of said body of water (2) a layer of water lying between the surface layer (23) of the body of water and the bottom layer (21) of the body of water.

In the context of the present invention, without limiting the scope of the present invention, a remote location will be understood as a location, within the body of water, whose smallest distance to an edge of the body of water (2) is greater than a certain threshold value. For example, and without limiting the scope of the present invention, said remote location may possess a smaller distance to an edge of the body of water (2) greater than 500 meters, more preferably greater than 1 kilometer, and even more preferably greater than 5 kilometers.

In the context of the present invention, without limiting the scope thereof, it will be understood that the body of water (2) may possess oxygen requirements and that the oxygen requirements of the body of water (2) may comprise, without being limited to these, biological requirements of species under culture, operating parameters of culture media present in the body of water, or normative or regulatory requirements of an authority, as well as a combination thereof. Such oxygen requirements may be measured in any suitable unit of measurement, such as, for example, and without limiting the scope of the present invention, kilograms of oxygen per cubic meter of water, kilograms of oxygen per square meter of water surface, kilograms of oxygen per individual, kilograms of oxygen per hour, or a combination thereof.

In the context of the present invention, without limiting the scope thereof, culture media (14) will be understood as a closed or semi-closed space that allows the cultivation of aquatic species, which may be plant, animal or other types. Examples of culture media may include, but are not limited to, cages, lanterns or hangers. Said culture media (14) may be presented as independent elements or as subdivisions of a larger element without limiting the scope of the present invention.

In the context of the present invention, without limiting the scope thereof, it will be understood that a fluid flow is laminar when the flow presents a Reynolds number of less than 4000, more preferably less than 3000, and even more preferably less than 2300.

In the context of the present invention, without limiting the scope thereof, two elements will be understood to be in fluid communication when they are connected to each other in such a way that a fluid can circulate from one element to the other without interruption and without being exposed to the outside. Such seamless communication may occur, for example, and without limiting the scope of the present invention, by direct communication between said elements or by providing intermediate elements that provide such seamless communication.

In the context of the present invention, without limiting the scope thereof, dynamic control of a variable will be understood to mean real-time or short time interval control of a particular variable. In a preferred embodiment, it will be understood that the control is performed in real time if the time difference between the acquisition of a feedback measurement for control of the variable and the actual control of the variable is less than 5 seconds, more preferably less than 1 second, and even more preferably less than 100 ms. Moreover, in a preferred embodiment, it will be understood that the control is performed in short time intervals if the time difference between the acquisition of a feedback measurement for control of the variable and the actual control of the variable is less than 10 minutes, more preferably less than 1 minute, and even more preferably less than 10 seconds.

In the context of the present invention, without limiting the scope thereof, vicinity will be understood as the area comprised within a radius around a specific point or region. The magnitude of said radius does not limit the scope of the present invention and may depend, for example, on the dimensions of the system (1), the area occupied by the floating platform (3), the nature and dimensions of the body of water (2), as well as combinations thereof.

In the context of the present invention, without limiting the scope thereof, an oxygen-containing fluid will be understood as a liquid or gas whose composition comprises molecular oxygen (O₂), either in solution, dispersion, or mixture. The proportion of molecular oxygen present in said fluid does not limit the scope of the present invention and may be, for example, greater than about 10 % by weight, more preferably greater than about 30 % by weight, and even more preferably greater than about 50 % by weight. For example, and without limiting the scope of the present invention, said oxygen-containing fluid may be selected from the group consisting of gaseous oxygen, air, water with dissolved oxygen, water with dissolved air, oxygen-enriched water, air-enriched water, as well as a combination thereof.

Advantageously, without limiting the scope thereof, the oxygen-containing fluid may be a gas whose composition comprises molecular oxygen (O₂). The proportion of molecular oxygen present in said gas does not limit the scope of the present invention and may be, for example, greater than about 130 % by weight, more preferably greater than about 50 % by weight, and even more preferably greater than about 80 % by weight. For example, and without limiting the scope of the present invention, said oxygen-containing gas may be gaseous oxygen, or air enriched with gaseous oxygen.

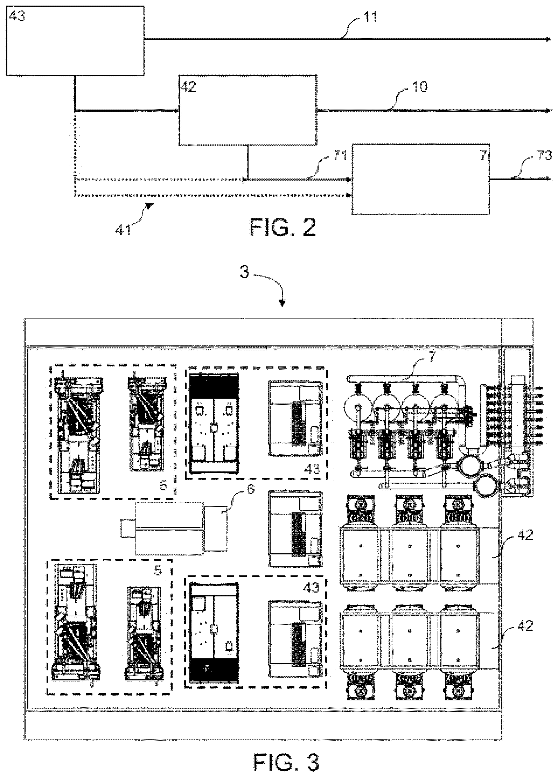

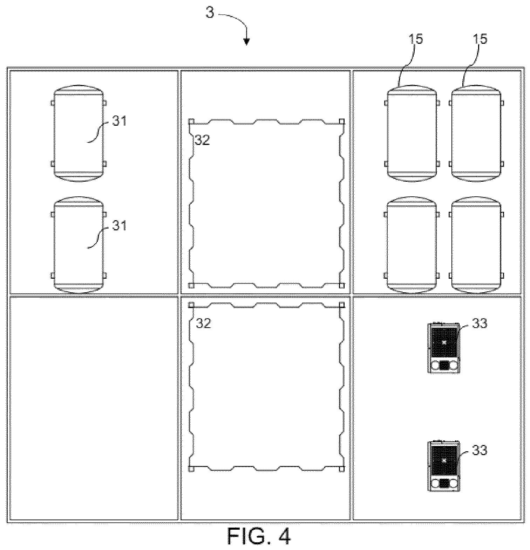

The system which is the subject of the present invention comprises a floating platform (3). Said floating platform (3) allows the autonomous system (1) which is the subject of the present invention to be installed in a remote location away from the body of water (2). In a preferred embodiment, without limiting the scope of the present invention, the floating platform (3) may comprise side walls and a roof, so as to define an enclosed or semi-enclosed interior space housing part of the components of the system (1) which is the subject of the present invention. Additionally, without limiting the scope of the present invention, the floating platform (3) may possess one or more levels or floors. For example, as schematically illustrated in Figures 3 and 4, and without limiting the scope of the present invention, a first level (illustrated in Figure 3) may house the gas generation subsystem (4), which may comprise, in turn, at least one compressed air generation subsystem (43), and at least one gaseous oxygen generation subsystem (42); the autonomous electricity supply subsystem (5); the control means (6) and the mixing and dissolving means (7) for the oxygen-containing gas in water. A second level (illustrated in Figure 4) may house, without limiting the scope of the present invention, at least one compressed air storage tank (31), at least one fuel storage tank (32), at least one oxygen-containing gas storage means (15), and at least one dryer (33).

The shape, materials and dimensions of the floating platform (3) do not limit the scope of the present invention and may depend, for example, on the oxygen requirements of the body of water (2), on the operational considerations of the system (1), on the weight and size of the components housed in said floating platform (3), among other aspects. In a preferred embodiment, without limiting the scope of the present invention, the floating platform (3) may have a buoyancy of at least 50 metric tons and may be configured to be towed in open water, for example, in the open sea.

In a preferred embodiment, without limiting the scope of the present invention, the floating platform (3) may additionally comprise one or more means of anchoring (not illustrated in the figures) to the bottom (24) of the body of water (2). For example, and without limiting the scope of the present invention, the one or more anchoring means may comprise ropes, anchors, buoys, weights, as well as a combination thereof.

The system (1) which is the subject of the present invention comprises, additionally, a subsystem for generating (4) an oxygen-containing gas. Any equipment or combination of equipment known in the prior art which can be housed on the floating platform (3) can be used as a oxygen-containing gas generation subsystem (4) without limiting the scope of the present invention.

For example, and without limiting the scope of the present invention, the oxygen-containing gas may be compressed air. In this preferred embodiment, for example, and without limiting the scope of the present invention, the gas generation subsystem (4) comprising oxygen may comprise one or more air compressors configured to compress air taken from the atmosphere, one or more dryers (33) configured to extract moisture from the air, one or more air filters configured to filter out suspended particles, oil droplets coming from the one or more compressors, and water droplets, and one or more compressed air storage tanks (31) configured to accumulate air and which may serve as a buffer for pressure fluctuations due to actuation of the one or more compressors.

In another example embodiment, and without limiting the scope of the present invention, the oxygen-containing gas may be gaseous oxygen. In this preferred embodiment, for example, and without limiting the scope of the present invention, the oxygen-comprising gas generation subsystem (4) may comprise one or more air sources, for example, of compressed air, one or more molecular sieve bed containing a specific adsorbent for nitrogen, one or more means of ventilation of the adsorbed gaseous nitrogen, and one or more storage means (15) for gaseous oxygen configured to accumulate the oxygen coming from the molecular sieve. In a more preferred embodiment, the gas generation subsystem (4) comprising oxygen may additionally comprise an oxygen piston compressor, and the storage means (15) may comprise a high pressure oxygen storage tank.

In a preferred embodiment, without limiting the scope of the present invention, the system (1) may comprise an oxygen-containing gas outlet operatively connected to the gas outlet (41) of the gas generation subsystem (4); a second supply line (10, 11) of the oxygen-containing gas operatively connected to the oxygen-containing gas outlet and extending into the body of water (2); and oxygen-containing gas supply means (12, 13) operatively connected to the second supply line (10, 11). For example, and without limiting the scope of the present invention, when the oxygen-containing gas is gaseous oxygen, the oxygen-containing gas supply means (12) may be positioned in a surface layer (23) of the body of water (2), in a vicinity of some culture media (14) present in said surface layer (23) of the body of water (2). In another example, and without limiting the scope of the present invention, when the oxygen-containing gas is compressed air, the oxygen-containing gas supply means (13) may be positioned in a layer (22) of the body of water (2) which is located between a surface layer (23) and the bottom layer (21).

In a preferred embodiment, the system (1) may comprise a first gas generation subsystem (42) generating a first gas which is gaseous oxygen; and a second subsystem (43) generating a second gas which is compressed air. In this preferred embodiment, as illustrated in the figures and without limiting the scope of the present invention, the second compressed air generation subsystem (43) can feed compressed air to the first gaseous oxygen subsystem (42). In a more preferred embodiment, without limiting the scope of the present invention, the system (1) which is the subject of the present invention may additionally comprise a gaseous oxygen outlet operatively connected with the first gas generation subsystem (42); a gaseous oxygen supply line (10) operatively connected with the gaseous oxygen outlet; gaseous oxygen supply means (12) operatively connected with the gaseous oxygen supply line (10); a compressed air outlet operatively connected with the second gas generation subsystem (43); a compressed air supply line (11) operatively connected with the compressed air outlet; and compressed air supply means (13) operatively connected with the compressed air supply line (11). In this preferred embodiment, in addition and without limiting the scope of the present invention, the oxygen supply means (12) may be positioned in a first depth of the body of water (2); and the compressed air supply means (13) may be positioned in a second depth of the body of water (2). This preferred configuration has the advantage, without limiting the scope of the present invention, of allowing the provision, independently, of compressed air, gaseous oxygen, and a water and oxygen mixture, each at a corresponding depth in the body of water (2).

In a more preferred embodiment, wherein the system (1) can provide compressed air, gaseous oxygen and a mixture of oxygen and water, the oxygen supply means (12) can be positioned in a surface layer (23) of the body of water (2), in a vicinity of a culture media (14) present in said surface layer (23) of the body of water (2).

In another more preferred embodiment, wherein the system (1) can provide compressed air, gaseous oxygen and a mixture of oxygen and water, the system (1) can comprise a plurality of oxygen supply means (12), each being operatively connected to the gaseous oxygen supply line (10) and positioned at a corresponding depth in the body of water (2). Additionally, or alternatively, without limiting the scope of the present invention, the system (1) may comprise a plurality of compressed air supply means (13), each being operatively connected to the compressed air supply line (11) and positioned at a corresponding depth in the body of water (2). Advantageously, without limiting the scope of the present invention, the system (1) which is the subject of the present invention may comprise both a plurality of oxygen supply means (12), each of which is operatively connected with the gaseous oxygen supply line (10) and which is positioned at a corresponding depth in the body of water (2), as a plurality of compressed air supply means (13), each of which is operatively connected to the compressed air supply line (11) and which is positioned at a corresponding depth in the body of water (2).

The gas generation subsystem (4) may be configured to generate the oxygen-containing gas with any concentration of oxygen, without limiting the scope of the present invention. For example, and without limiting the scope of the present invention, the oxygen content in the oxygen-containing gas may depend on the oxygen requirements of the body of water (2), as well as on operating parameters of the system (1) which is the subject of the present invention. In a preferred embodiment, without limiting the scope of the present invention, the gas generation subsystem (4) may be configured to generate the oxygen-containing gas with an oxygen concentration greater than 80 % by weight, more preferably greater than 90 % by weight, and even more preferably greater than 93 % by weight. In an example embodiment, without limiting the scope of the present invention, the gas generation subsystem (4) may be configured to generate the oxygen-containing gas with an oxygen concentration of between 90 % and 93 % by weight.

The system (1) which is the subject of the present invention further comprises an autonomous electricity supply subsystem (5). In the context of the present invention, and without limiting the scope thereof, it should be understood that the autonomy of the autonomous electricity supply subsystem (5) is given by a minimum time in which the autonomous electricity supply subsystem (5) can operate without requiring the intervention of one or more operators. The autonomous electricity supply subsystem (5) may comprise one or more electricity sources configured to provide power to some or all of the remaining components housed on the floating platform (3). The autonomous electricity supply subsystem (5) may additionally comprise, without limiting the scope of the present invention, electricity generation means, electricity storage means, voltage rectifiers, alternators, voltage regulators, current regulators, interruption means, electrical protection means, as well as a combination thereof. In a preferred embodiment, without limiting the scope of the present invention, the autonomous electricity supply subsystem (5) may comprise an electricity source which is selected from the group consisting of generators, solar panels and/or batteries, as well as a combination thereof. In case of comprising generators, such generators may be selected, for example, and without limiting the scope of the present invention, from the group consisting of fuel generators, wind generators, hydrogen fuel cells, tidal generators, as well as a combination thereof.

The system (1) which is the subject of the present invention further comprises control means (6) operatively connected to the gas generation subsystem (4) and to the autonomous electricity supply subsystem (5). The control means (6) are additionally operatively connected to the gas mixing and dissolving means (7).

In the context of the present invention, without limiting the scope thereof, it should be understood as control means (6) one or more processors configurable and interconnected with each other. In this regard, when more than one processor is provided as part of said control means (6), without limiting the scope of the present invention, each of said processors may be configured to perform a part of an operation, the whole of an operation, a subset of operations, or the whole of the operations for which said control means (6) are configured. The position of said control means (6) on the floating platform (3) does not limit the scope of the present invention. When said control means (6) comprise a plurality of processors interconnected with each other, said plurality of processors may be provided integrated in a single unit or distributed in different positions on the floating platform (3), without limiting the scope of the present invention.

In the context of the present invention, without limiting the scope thereof, it is to be understood that an element is operatively connected with the control means (6) if the control means (6) can control the operation of part or all of said element. Additionally, in certain preferred embodiments and without limiting the scope of the present invention, the control means (6) may be configured to obtain measurements from said element and to adjust or modify the operation of said element, or another element, in response to said measurements.

The specific manner in which the configuration of the control means (6) is obtained does not limit the scope of the present invention and any option known to a person of ordinary skill in the art may be used. Furthermore, the means by which the operative connection between the control means (6) and the remaining elements of the system (1) which is the subject of the present invention is provided do not limit the scope of the present invention and any alternative known in the prior art may be used.

The system (1) which is the subject of the present invention additionally comprises means for mixing and dissolving (7) oxygen-containing gas in water, having a gas inlet (71) operatively connected with a gas outlet (41) of the gas generation subsystem (4), a water inlet (72) operatively connected with a water source, and a gas-mixed water outlet (73).

The manner by which the mixing and dissolving means (7) produce the water and gas mixture does not limit the scope of the present invention, and any apparatus, equipment or combinations thereof known in the prior art may be used. For example, and without limiting the scope of the present invention, the mixing and dissolving means may comprise a nanobubble generator of oxygen-containing gas, and one or more nanobubble and water mixing equipment.

In a preferred embodiment, without limiting the scope of the present invention, the mixing and dissolving means (7) may comprise a Venturi tube (74) having a corresponding water inlet operatively connected with the water inlet (72) of the mixing and dissolving means (7), a corresponding gas inlet operatively connected with the gas inlet (71) of the mixing and dissolving means (7), and a corresponding gas-mixed water outlet. In a more preferred embodiment, the mixing and dissolving means (7) may additionally comprise a dilution cone (75) operatively connected downstream of the corresponding gas-mixed water outlet of the Venturi tube (74). In another more preferred embodiment, the mixing and dissolving means (7) may additionally comprise a water bypass line (76) that directly connects the corresponding water inlet of the Venturi tube (74) with the corresponding gas-mixed water outlet of the Venturi tube (74). In an even more preferred embodiment, the mixing and dissolving means (7) may additionally comprise a regulating valve (77) configured to control a flow rate of water flowing through the water bypass line (76).

As schematically illustrated in the figures, and without limiting the scope of the present invention, the mixing and dissolving means (7) may additionally comprise one or more shutoff and/or flow regulating valves.

In another preferred embodiment, as illustrated in the figures and without limiting the scope of the present invention, the system may comprise storage means (15) of the oxygen-containing gas operatively connected between the gas outlet (41) of the gas generation subsystem (4) and the gas inlet (71) of the mixing and dissolving means (7).

The system (1) which is the subject of the present invention further comprises a supply line (8) of gas-mixed water, operatively connected with the gas-mixed water outlet (73) of the mixing and dissolving means (7), said supply line (8) extending from the floating platform (3) to a lower layer (21) of the body of water (2). This supply line allows the water and gas mixture to be delivered to the lower layer (21) of the body of water for further supply. In this respect, the shape, materials, and dimensions, particularly the length, of said supply line (8) do not limit the scope of the present invention and any alternative known in the prior art may be used.

In those preferred embodiments in which the system (1) comprises a gaseous oxygen supply line (10) and/or a compressed air supply line (11), the shape, materials, and dimensions, particularly the length, of said gaseous oxygen supply line (10) and/or said compressed air supply line (11) do not limit the scope of the present invention and any alternative known in the prior art may be used.

The system (1) which is the subject of the present invention further comprises gas-mixed water supply means (9) operatively connected with the supply line (8), wherein said supply means (9) provide a laminar flow of gas-mixed water in the lower layer (21) of the body of water (2), preventing the resuspension of sediment from the bottom (24) of the body of water (2). The shape, dimensions, and materials of said supply means (9) do not limit the scope of the present invention and may depend, for example, on the nature of the oxygen-containing gas, the requirements of the body of water (2), the periodicity with which the water and gas mixture is provided to the body of water (2), as well as a combination thereof.

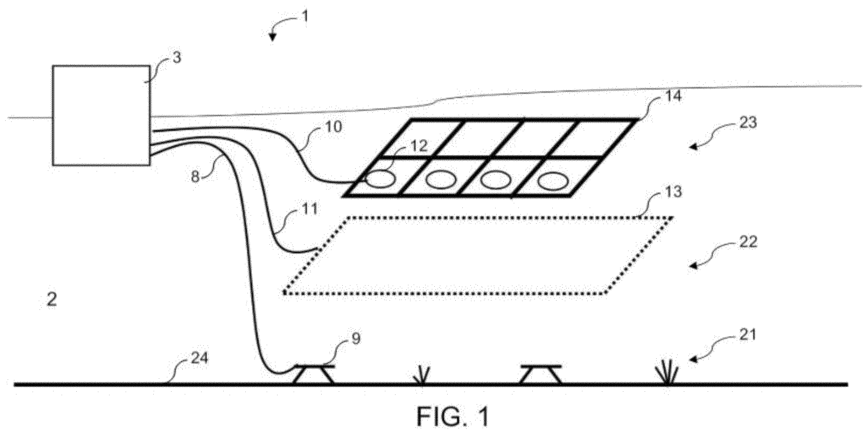

In a preferred embodiment, without limiting the scope of the present invention, the supply means (9) may comprise at least one diffuser (91) which is positioned in the lower layer (21) of the body of water, as schematically illustrated in Figure 1. The shape, dimensions, and materials of said diffuser (91) do not limit the scope of the present invention as long as they allow the laminar flow of gas-mixed water in the lower layer (21) of the body of water.

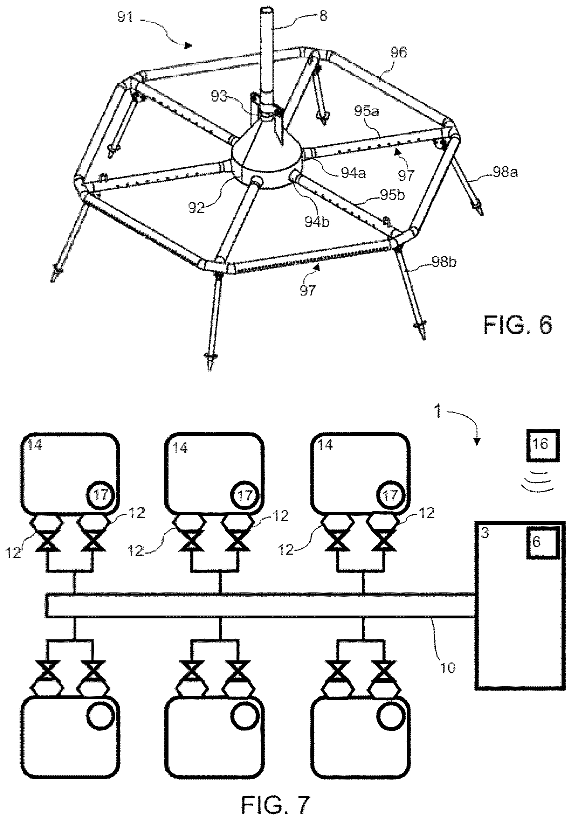

For example, as illustrated in Figure 6, and without limiting the scope of the present invention, the diffuser (91) may comprise a central body (92) having a gas-mixed water inlet (93) and a plurality of gas-mixed water outlets (94a, 94b) in fluid communication with said gas-mixed water inlet (93); a plurality of radial lines (95a, 95b), wherein each of said radial lines (95a, 95b) is connected in fluid communication with a corresponding gas-mixed water outlet (94a, 94b) of said central body (92); an outer ring (96) connected in fluid communication with said plurality of radial lines (95a, 95b); a plurality of perforations (97) distributed longitudinally along said radial lines (95a, 95b) and along said outer ring (96), said plurality of perforations facing an outward direction with respect to said central body (92); and a plurality of anchoring supports (98a, 98b) distributed along said outer ring (96).

In a more preferred embodiment, without limiting the scope of the present invention, each of said anchoring supports (98a, 98b) can acquire at least two positions, one deployed and one retracted.

In those embodiments in which the system (1) which is the subject of the present invention comprises gaseous oxygen supply means (12) and/or compressed air supply means (13), said supply means (12, 13) may comprise one or more devices allowing the injection or diffusion of oxygen and/or compressed air into the body of water (2), for example, in the vicinity of a culture medium (14) present in a surface layer (23) of the body of water (2) or in an intermediate layer (22) of the body of water (2). The shape, dimensions, and materials of said gaseous oxygen supply means (12) and/or compressed air supply means (13) do not limit the scope of the present invention and may depend, for example, on the nature of the oxygen-containing gas, the requirements of the body of water (2), the periodicity with which gaseous oxygen and/or compressed air is provided to the body of water (2), as well as a combination thereof. In a preferred embodiment, each of said gaseous oxygen supply means (12) and/or compressed air supply means (13) may comprise a gas outlet which is selected from the group consisting of diffusers, eductors, injectors, sprinklers, as well as a combination thereof.

In a preferred embodiment, without limiting the scope of the present invention, the system (1) that is the subject of the present invention may additionally comprise at least one safety valve for emergency shut-offs of the oxygen-containing gas and/or of the water and gas mixture.

In a preferred embodiment, without limiting the scope of the present invention, the system may comprise at least one current meter (16) positioned within a vicinity of the floating platform (3) and operatively connected with the control means (6). The extent of said vicinity does not limit the scope of the present invention and will depend on the extent of the floating platform (3), the extent of the body of water (2), or other operational aspects of the system (1) which is the subject of the present invention. In a preferred embodiment, without limiting the scope of the present invention, said vicinity may be defined by a radius of 100 m, more preferably of 50 m and even more preferably of 10 m around the area occupied by the floating platform (3). In the context of the present invention, without limiting the scope thereof, it is to be understood that the at least one current meter (16) is operatively connected with the control means (6) if the control means (6) can receive current direction and speed measurements from said at least one current meter (16). In a more preferred embodiment, without limiting the scope of the present invention, said operative connection may additionally comprise control means (6) configured to control the operation of said at least one current meter (16).

In those preferred embodiments comprising it, the at least one current meter (16) may be configured to obtain at least one measurement of water current velocity and direction in the body of water (2) and to communicate such measurement to the control means (6). In this way, the control means (6) can control the supply of gas-mixed water in response to said at least one measurement of velocity and direction of a water current. In a more preferred embodiment, without limiting the scope of the present invention, the at least one current meter (16) may be configured to obtain a plurality of measurements of direction and velocity of water currents, said plurality of measurements being obtained at a plurality of depths of said body of water (2), and to communicate said plurality of measurements to the control means (6).

In other preferred embodiments, without limiting the scope of the present invention, the system may comprise a plurality of current meters (16), each configured to obtain at least one corresponding water velocity and current direction measurement in the body of water (2), and to communicate said corresponding measurement to the control means (6). The manner in which said plurality of current meters (16) are distributed in the body of water (2) does not limit the scope of the present invention. For example, and without limiting the scope of the present invention, said plurality of current meters (16) may be distributed at different depths of the body of water (2), at different horizontal positions in the body of water (2), or at a combination thereof.

In a preferred embodiment, the control means may be configured to predict or forecast the behavior of water currents in the body of water from historical measurements of water currents. For this, the system may comprise at least one storage memory (not illustrated in the figures) operatively connected with the control means and configured to store the at least one water flow direction and velocity measurement received in said memory, said at least one stored measurement having an associated time stamp. Additionally, the control means may be configured to access said stored measurement and to predict a behavior of water currents in the body of water based on said at least one stored measurement.

For this, in a preferred embodiment, the control means may be configured to obtain at least one direction and/or water current velocity interpolation curve as a function of time based on the at least one stored measurement, preferably on a plurality of stored measurements. Said plurality may comprise all or a subset of the stored measurements. In a more preferred embodiment, and without limiting the scope of the present invention, the control means can obtain said interpolation curve from a number of last stored measurements. For example, and without limiting the scope of the present invention, the control means may obtain an interpolation curve from between 10 and 100 last stored measurements. The specific mode by which the control means obtain such an interpolation curve does not limit the scope of the present invention and any method known in the prior art may be used. Additionally, without limiting the scope of the present invention, the time span that the control means consider to obtain said interpolation curve does not limit the scope of the present invention. In an example embodiment, advantageously and without limiting the scope of the present invention, the time span may be greater than or equal to one lunar cycle, typically between 28 and 30 days. Said preferred embodiment has the advantage that it allows obtaining an interpolation curve incorporating all the tidal variations in the body of water where the plurality of culture media is located, due to the lunar cycle.

Once the at least one velocity and/or current interpolation curve as a function of time has been obtained, the control means may extrapolate said at least one obtained curve to predict a water current direction and/or velocity at a future time.

In another preferred embodiment, the system may additionally comprise means for measuring at least one environmental variable operatively connected with the control means. Said environmental variable may be, for example, and without limiting the scope of the present invention, temperature, environmental humidity, wind direction, and speed or amount of falling water. In this preferred embodiment, the control means may be configured to obtain and store at least one measurement of said at least one environmental variable, said at least one measurement of said at least one stored environmental variable having an associated time stamp. Additionally, the control means may be configured to predict a behavior of water currents in the body of water based on said at least one measurement of stored water current direction and velocity and on said at least one measurement of at least one stored environmental variable.

To this end, in a preferred embodiment, the control means may be configured to implement a machine learning model that relates a plurality of stored measurements of direction and velocity of water currents to a plurality of stored measurements of the at least one environmental variable. Said plurality may comprise all or a subset of the stored measurements. Any machine learning model can be used to implement the machine learning model without limiting the scope of the present invention.

Once the machine learning model is obtained, the control means can use that model to predict a water current direction and/or velocity at a future time.

In another preferred embodiment, without limiting the scope of the present invention, the control means may obtain or determine a hydrodynamic model of the body of water and predict the direction and/or velocity of water currents in said body of water by means of a fluid dynamic model, for example, using computational fluid dynamics (CFD).

In any of the previously described cases, the control means may be further configured to update said interpolation curve, said machine learning model, or said hydrodynamic model, from future measurements of water current direction and/or velocity, by comparing said measurements with forecasts and/or predictions made.

In a preferred embodiment, without limiting the scope of the present invention, the system (1) may additionally comprise at least one oxygen sensor (17) operatively connected with the control means (6) and positioned within a vicinity of the floating platform (3). The extent of said second vicinity does not limit the scope of the present invention and will depend on the extent of the floating platform (3), the extent of the body of water (2), or other operational aspects of the system (1) which is the subject of the present invention. In a preferred embodiment, without limiting the scope of the present invention, said second vicinity may be defined by a radius of 500 m, more preferably of 200 m and even more preferably of 100 m around the area occupied by the floating platform (3).

In the preferred embodiment in which the system (1) additionally comprises at least one oxygen sensor (17), the control means (6) may additionally be configured to receive at least one oxygen measurement from said at least one oxygen sensor (17). Furthermore, the control means (6) may be configured to control the supply of gas-mixed water in response to the at least one oxygen measurement received.

In another preferred embodiment, without limiting the scope of the present invention, the system (1) may comprise a plurality of oxygen sensors (17), each configured to obtain at least one corresponding oxygen measurement in the body of water (2) and to communicate said corresponding measurement to the control means (6). The manner in which said plurality of oxygen sensors are distributed in the body of water (2) does not limit the scope of the present invention. For example, as schematically illustrated in Fig. 7, an oxygen sensor (17) may be provided associated with a corresponding culture medium (14), such that the oxygen measurement performed by a particular oxygen sensor (17) may be associated with the amount of oxygen present in its corresponding culture medium (14).

The present invention further provides a method for autonomously generating and supplying oxygen in a bottom layer (21) of a body of water (2), at remote locations and avoiding resuspension of sediment from a bottom (24) of the body of water (2), comprising the steps of:
- providing an autonomous oxygen generation and supply system (1) comprising: a floating platform (3), wherein said floating platform (3) contains: a subsystem for generating a gas (4) containing oxygen; an autonomous electricity supply subsystem (5) operatively connected to the gas generation subsystem (4); and control means (6) operatively connected to the gas generation subsystem (4) and the autonomous electricity supply subsystem (5), means for mixing and dissolving (7) the oxygen-containing gas in water, having a gas inlet (71) operatively connected to a gas outlet (41) of the gas generation subsystem (4), a water inlet (72) operatively connected to a water source, and a gas-mixed water outlet (73); wherein the control means (6) are additionally operatively connected to the gas mixing and dissolving means (7); a supply line (8) of gas-mixed water operatively connected to the gas-mixed water outlet (72) of the mixing and dissolving means (7), said supply line (8) extending from the floating platform (3) to the bottom layer (21) of the body of water (2); and gas-mixed water supply means (9) operatively connected to the supply line (8);

generating the oxygen-containing gas by means of the gas generation subsystem (4); generating a mixture of water with the oxygen-containing gas using the mixing and dissolving means (7); and
supplying gas-mixed water using the supply means (9), wherein said supply means (9) provide a laminar flow of gas-mixed water in the bottom layer (21) of the body of water (2), preventing resuspension of sediment from the bottom (24) of the body of water (2).

In a preferred embodiment, without limiting the scope of the present invention, the method may additionally comprise:
providing the system with the oxygen-containing gas generation subsystem being a first gas generation subsystem that generates a first gas, the first gas being gaseous oxygen;
further providing the system with: a second subsystem for generating a second oxygen-containing gas, wherein said second gas is compressed air; a gaseous oxygen outlet operatively connected with the first gas generation subsystem; a gaseous oxygen supply line operatively connected with the gaseous oxygen outlet; a plurality of oxygen supply means, each operatively connected with the gaseous oxygen supply line and positioned at a corresponding depth in the body of water; a compressed air outlet operatively connected with the second gas generation subsystem; a compressed air supply line operatively connected with the compressed air outlet; and a plurality of compressed air supply means, each operatively connected with the compressed air supply line and positioned at a corresponding depth in the body of water;
supplying gaseous oxygen at different depths in the body of water using said plurality of oxygen supply means; and
supplying compressed air to different depths in the body of water using said plurality of compressed air supply means.

The present invention further provides a use of an autonomous oxygen generation and supply system (1), wherein the system (1) comprises a first gaseous oxygen generation subsystem (42) and a second compressed air generation subsystem (43), as well as a plurality of oxygen supply means (12), each operatively connecting with the gaseous oxygen supply line (10) and positioned at a corresponding depth in the body of water (2); and a plurality of compressed air supply means (13), each operatively connecting to the compressed air supply line (11) and positioned at a corresponding depth in the body of water (2). In this case, the use serves to supply oxygen and/or air to different depths of the body of water (2).

All of the previously described technical feature options of the system (1), which is the subject of the present invention, can be applied by means of their corresponding configurations, with respect to the method and use which are the subject of the present invention, without this limiting the scope of the present application.

According to the previously detailed description, it is possible to obtain an autonomous system (1), method of oxygen generation and supply, and use of the system that allow to overcome the deficiencies of the prior art.

It should be understood that the various previously described options for different technical features of the system (1), method and/or use of the present invention may be combined with each other, or with other options known to a person of ordinary skill in the art, in any manner intended without limiting the scope of the present application.

Hereinafter, examples of embodiments of the present invention will be described. It should be understood that such examples are described in order to provide a better understanding of the present invention, but in no way limit the scope of protection sought. Additionally, details of technical features specified in different examples may be combined with each other, or with other previously described preferred embodiments, in any manner contemplated without limiting the scope of the present invention.

### Example 1: Implementation of an autonomous system

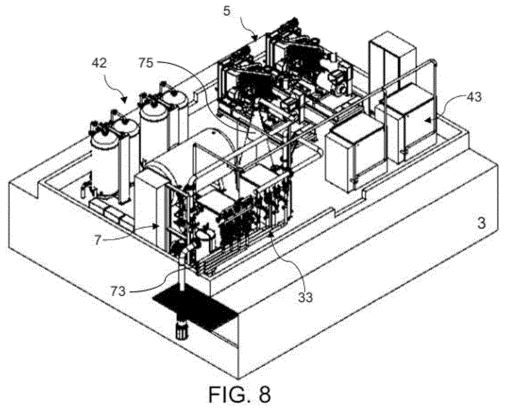

As schematically illustrated in Figure 8, an autonomous pontoon-type system (3) was constructed with generation of up to 11 Nm³/min of compressed air and 0.6 Nm³/min of gaseous oxygen at 90 % purity, with a subsystem for mixing and dissolving up to 0.2 Nm³/min of oxygen in a flow of water. The system incorporates diesel electric generators (5), air compressors (43), and refrigerated air dryers (33), as well as oxygen generators (42) with PSA technology. The mixing and dissolving subsystem (7) comprises centrifugal seawater pumps, Venturis and a dilution cone (75). The system has 2 compressed air outlets, 4 gaseous oxygen outlets, and 4 oxygen-mixed water outlets (73), for the supply of each fluid in layers at different depths within a body of water. The system also has a control system that automatically commands the operation of the electric generators (5), compressors (43), dryers (33), oxygen generators (42), water pumps, and a set of automated valves to control the flow within the system and to the outlets.

### Example 2: Use of the autonomous system

The system in the example above was implemented at an offshore fish culture facility, 2 km from the nearest port, for the incorporation of oxygen in the culture cages in a surface layer of the water column, and for the incorporation of oxygen-mixed water in a lower layer of the water column, adjacent to the seafloor sediment. The installation comprised 4 independent lines for the distribution and diffusion of gaseous oxygen in the culture cages, and 4 independent lines for the distribution and spraying of oxygen-mixed water in a layer adjacent to the seafloor. In addition, 5 dissolved oxygen sensors installed in a lower layer of the water column were incorporated. The system operated autonomously for a period of 4 months. During this period, access to the culture center was required only for maintenance and to refuel the system.

### Reference list

1: Autonomous system
2: Body of water
21: Lower layer of the body of water
22: Intermediate layer of the body of water
23: Surface layer of the body of water
24: Bottom of the body of water
3: Floating platform
31: Compressed air storage tanks
32: Fuel storage tanks
33: Dryers
4: Gas generation subsystem
41: Gas outlet of the gas generation subsystem
42: First gas generation subsystem
43: Second gas generation subsystem
5: Autonomous electricity supply subsystem
6: Control means
7: Mixing and dissolving means
71: Gas inlet of the mixing and dissolving means
72: Water inlet of the mixing and dissolving means
73: Water and gas mixture outlet of the mixing and dissolving means
74: Venturi tube of the mixing and dissolving means
75: Dilution cone of the mixing and dissolving means
76: Water bypass line of mixing and dissolving means
77: Regulation valve of the mixing and dissolving means
8: Gas-mixed water supply line
9: Gas-mixed water supply means
91: Diffuser
92: Diffuser central body
93: Diffuser gas-mixed water inlet
94a, 94b: Plurality of gas-mixed water outlets of the diffuser central body
95a, 95b: Plurality of diffuser radial lines
96: Diffuser outer ring
97: Plurality of diffuser perforations
98a, 98b: Plurality of diffuser anchoring supports
10: Gaseous oxygen supply line
11: Compressed air supply line
12: Gaseous oxygen supply means
13: Compressed air supply means
14: Culture media
15: Gas storage means
16: Current meter
17: Oxygen sensor

## Claims

1. An autonomous system (1) for generating and supplying oxygen in at least one layer (21, 22, 23) of a body of water (2), at remote locations and preventing resuspension of sediment from a bottom (24) of the body of water (2), comprising:
- a floating platform (3), wherein said floating platform (3) contains:
- a subsystem for generating (4) an oxygen-containing gas;
- an autonomous electricity supply subsystem (5) operatively connected to the gas generation subsystem (4); and
- control means (6) operatively connected to the gas generation subsystem (4) and to the autonomous electricity supply subsystem,
**characterized in that** the floating platform (3) additionally contains:
- means for mixing and dissolving (7) oxygen-containing gas in water, having a gas inlet (71) operatively connected with a gas outlet (41) of the gas generation subsystem (4), a water inlet (72) operatively connected with a water source, and a gas-mixed water outlet (73);
- wherein the control means (6) are additionally operatively connected to the gas mixing and dissolving means (7);
wherein the system (1) further comprises:
- a supply line (8) of gas-mixed water, operatively connected with the gas-mixed water outlet (73) of the mixing and dissolving means (7), said supply line (8) extending from the floating platform (3) to a lower layer (21) of the body of water (2); and
- gas-mixed water supply means (9) operatively connected with the supply line (8), wherein said supply means (9) provide a laminar flow of gas-mixed water in the lower layer (21) of the body of water (2), preventing the resuspension of sediment from the bottom (24) of the body of water (2).

2. The system (1) of claim 1, **characterized in that** it additionally comprises:
an oxygen-containing gas outlet operatively connected to the gas outlet (41) of the gas generation subsystem (4);
a second oxygen-containing gas supply line (10, 11) operatively connected to the oxygen-containing gas outlet and extending into the body of water (2); and
oxygen-containing gas supply means (12, 13) operatively connected with the second supply line (10, 11).

3. The system (1) of claim 2, **characterized in that** the oxygen-containing gas is gaseous oxygen, and **in that** the oxygen-containing gas supply means (12) are positioned in a surface layer (23) of the body of water (2), in a vicinity of a culture media (14) present in said surface layer (23) of the body of water (2).

4. The system (1) of claim 2, **characterized in that** the oxygen-containing gas is compressed air, and **in that** the oxygen-containing gas supply means (13) are positioned in a layer (22) of the body of water (2) which is located between a surface layer (23) and the bottom layer (21).

5. The system of claim 1, **characterized in that** the oxygen-containing gas generation subsystem (4) is a first gas generation subsystem (42) that generates a first gas, the first gas being gaseous oxygen; wherein the system (1) additionally comprises:
an oxygen gas outlet operatively connected to the first gas generation subsystem (42);
a gaseous oxygen supply line (10) operatively connected to the gaseous oxygen outlet;
gaseous oxygen supply means (12) operatively connected with the gaseous oxygen supply line (10);
- a second subsystem (43) for generating a second oxygen-containing gas, wherein said second gas is compressed air;
a compressed air outlet operatively connected to the second gas generation subsystem (43);
a compressed air supply line (11) operatively connected to the compressed air outlet; and
compressed air supply means (13) operatively connected to the compressed air supply line (11);
wherein the oxygen supply means (12) are positioned in a first depth of the body of water (2); and
wherein the compressed air supply means (13) are positioned in a second depth of the body of water (2).

6. The system (1) of claim 5, **characterized in that** the oxygen supply means (12) are positioned in a surface layer (23) of the body of water (2), in a vicinity of a culture medium (14) present in said surface layer (23) of the body of water (2).

7. The system (1) of claim 5, **characterized in that** it comprises a plurality of oxygen supply means (12), each operatively connected to the gaseous oxygen supply line (10) and positioned at a corresponding depth in the body of water (2).

8. The system (1) of claim 5, **characterized in that** it comprises a plurality of compressed air supply means (13), each operatively connected to the compressed air supply line (11) and positioned at a corresponding depth in the body of water (2).

9. The system (1) of claim 5, **characterized in that** it comprises:
- a plurality of oxygen supply means (12), each operatively connected to the gaseous oxygen supply line (10) and positioned at a corresponding depth in the body of water (2); and
- a plurality of compressed air supply means (13), each operatively connected to the compressed air supply line (11) and positioned at a corresponding depth in the body of water (2).

10. The system (1) of claim 1, **characterized in that** the gas generation subsystem (4) is configured to generate the oxygen-containing gas with an oxygen concentration greater than 80 % by weight.

11. The system of claim 1, **characterized in that** the mixing and dissolving means (7) comprise a Venturi tube (74) having a corresponding water inlet operatively connected with the water inlet (72) of the mixing and dissolving means (7), a corresponding gas inlet operatively connected with the gas inlet (71) of the mixing and dissolving means (7), and a corresponding gas-mixed water outlet.

12. The system (1) of claim 11, **characterized in that** the mixing and dissolving means (7) additionally comprise a dilution cone (75) operatively connected downstream of the corresponding gas-mixed water outlet of the Venturi tube (74).

13. The system (1) of claim 11, **characterized in that** the mixing and dissolving means (7) additionally comprise a water bypass line (76) directly connecting the corresponding water inlet of the Venturi tube (74) with the corresponding gas-mixed water outlet of the Venturi tube (74).

14. The system (1) of claim 13, **characterized in that** the mixing and dissolving means (7) additionally comprise a regulating valve (77) configured to control a flow rate of water flowing through the water bypass line (76).

15. The system (1) of claim 1, **characterized in that** the autonomous electricity supply subsystem (5) has a source of electricity that is selected from the group consisting of generators, solar panels and/or batteries, as well as a combination thereof.

16. The system (1) of claim 1, **characterized in that** it additionally comprises oxygen-containing gas storage means (15) operatively connected between the gas outlet (41) of the gas generation subsystem (4) and the gas inlet (71) of the mixing and dissolving means (7).

17. The system (1) of claim 1, **characterized in that** it comprises at least one current meter (16) operatively connected with the control means (6) and positioned within a vicinity of the floating platform (3), wherein the control means (6) are further configured to receive at least one water current direction and velocity measurement from said at least one current meter (16), and to control the oxygen supply in response to said water current direction and velocity measurement.

18. The system (1) of claim 1, **characterized in that** it comprises at least one oxygen sensor (17) operatively connected with the control means (6) and positioned within a vicinity of the floating platform (3), wherein the control means (6) are further configured to receive at least one oxygen measurement from said at least one oxygen sensor (17) and to control the oxygen supply in response to said oxygen measurement.

19. The system (1) of claim 1, **characterized in that** the gas-mixed water supply means (9) comprise at least one diffuser (91), wherein said diffuser (91) comprises a central body (92) having a gas-mixed water inlet (93) and a plurality of gas-mixed water outlets (94a, 94b) in fluid communication with said gas-mixed water inlet (93); a plurality of radial lines (95a, 95b), wherein each of said radial lines (95a, 95b) is connected in fluid communication with a corresponding gas-mixed water outlet (94a, 94b) of said central body (92); an outer ring (96) connected in fluid communication with said plurality of radial lines (95a, 95b); a plurality of perforations (97) distributed longitudinally along said radial lines (95a, 95b) and along said outer ring (96), said plurality of perforations facing an outward direction with respect to said central body (92); and a plurality of anchoring supports (98a, 98b) distributed along said outer ring (96).

20. The system (1) of claim 19, **characterized in that** each of said anchoring supports (98a, 98b) can have at least two positions, one deployed and one retracted.

21. The system (1) of claim 1, **characterized in that** the oxygen-containing gas is selected from the group consisting of gaseous oxygen and air, as well as a combination thereof.

22. The system (1) of claim 1, **characterized in that** it additionally comprises at least one safety valve for emergency shutdowns of the oxygen-containing gas and/or water and gas mixture.

23. A method for autonomously generating and supplying oxygen to a bottom layer (21) of a body of water (2), at remote locations and avoiding resuspension of sediment from a bottom (24) of the body of water (2), **characterized in that** it comprises the steps of:
- providing an autonomous oxygen generation and supply system (1) comprising: a floating platform (3), wherein said floating platform (3) contains: a subsystem for generating a gas (4) containing oxygen; an autonomous electricity supply subsystem (5) operatively connected to the gas generation subsystem (4); and control means (6) operatively connected to the gas generation subsystem (4) and the autonomous electricity supply subsystem (5), means for mixing and dissolving (7) the oxygen-containing gas in water, having a gas inlet (71) operatively connected to a gas outlet (41) of the gas generation subsystem (4), a water inlet (72) operatively connected to a water source, and a gas-mixed water outlet (73); wherein the control means (6) are additionally operatively connected to the gas mixing and dissolving means (7); a supply line (8) of gas-mixed water operatively connected to the gas-mixed water outlet (72) of the mixing and dissolving means (7), said supply line (8) extending from the floating platform (3) to the bottom layer (21) of the body of water (2); and gas-mixed water supply means (9) operatively connected to the supply line (8);
generating the oxygen-containing gas by means of the gas generation subsystem (4); generating a mixture of water with the oxygen-containing gas using the mixing and dissolving means (7); and
supplying gas-mixed water using the supply means (9), wherein said supply means (9) provide a laminar flow of gas-mixed water in the bottom layer (21) of the body of water (2), preventing resuspension of sediment from the bottom (24) of the body of water (2).

24. The method of claim 23, **characterized in that** it additionally comprises:
providing the system with the oxygen-containing gas generation subsystem being a first gas generation subsystem that generates a first gas, the first gas being gaseous oxygen;
further providing the system with: a second subsystem for generating a second oxygen-containing gas, wherein said second gas is compressed air; a gaseous oxygen outlet operatively connected with the first gas generation subsystem; a gaseous oxygen supply line operatively connected with the gaseous oxygen outlet; a plurality of oxygen supply means, each operatively connected with the gaseous oxygen supply line and positioned at a corresponding depth in the body of water; a compressed air outlet operatively connected with the second gas generation subsystem; a compressed air supply line operatively connected with the compressed air outlet; and a plurality of compressed air supply means, each operatively connected with the compressed air supply line and positioned at a corresponding depth in the body of water;
supplying gaseous oxygen at different depths in the body of water using said plurality of oxygen supply means; and
supplying compressed air to different depths in the body of water using said plurality of compressed air supply means.

25. Use of an autonomous oxygen generation and supply system (1) according to claim 9, **characterized in that** it serves to supply oxygen and/or air to different depths of the body of water (2).

## Amended claims

### Amended claims under Art. 19.1 PCT

1. An autonomous system (1) for generating and supplying oxygen in at least one layer (21, 22, 23) of a body of water (2), at remote locations and preventing resuspension of sediment from a bottom (24) of the body of water (2), comprising:
- a floating platform (3), wherein said floating platform (3) contains:
- a subsystem for generating (4) an oxygen-containing gas;
- an autonomous electricity supply subsystem (5) operatively connected to the gas generation subsystem (4); and
- control means (6) operatively connected to the gas generation subsystem (4) and to the autonomous electricity supply subsystem,
**characterized in that** the floating platform (3) additionally contains:
- means for mixing and dissolving (7) oxygen-containing gas in water, having a gas inlet (71) operatively connected with a gas outlet (41) of the gas generation subsystem (4), a water inlet (72) operatively connected with a water source, and a gas-mixed water outlet (73);
- wherein the control means (6) are additionally operatively connected to the gas mixing and dissolving means (7);
wherein the system (1) further comprises:
- a supply line (8) of gas-mixed water, operatively connected with the gas-mixed water outlet (73) of the mixing and dissolving means (7), said supply line (8) extending from the floating platform (3) to a lower layer (21) of the body of water (2); and
- gas-mixed water supply means (9) operatively connected to the supply line (8), said supply means (9) comprising at least one diffuser (91), wherein said diffuser (91) comprises a central body (92) having a gas-mixed water inlet (93) and a plurality of gas-mixed water outlets (94a, 94b) in fluid communication with said gas-mixed water inlet (93); a plurality of radial lines (95a, 95b), wherein each of said radial lines (95a, 95b) is connected in fluid communication with a corresponding gas-mixed water outlet (94a, 94b) of said central body (92); a plurality of perforations (97) distributed longitudinally along said radial lines (95a, 95b), said plurality of perforations facing an outward direction with respect to said central body (92) and providing a laminar flow of gas-mixed water in the bottom layer (21) of the body of water (2), preventing resuspension of sediment from the bottom (24) of the body of water (2).

2. The system (1) of claim 1, **characterized in that** it additionally comprises:
an oxygen-containing gas outlet operatively connected to the gas outlet (41) of the gas generation subsystem (4);
a second oxygen-containing gas supply line (10, 11) operatively connected to the oxygen-containing gas outlet and extending into the body of water (2); and
oxygen-containing gas supply means (12, 13) operatively connected with the second supply line (10, 11).

3. The system (1) of claim 2, **characterized in that** the oxygen-containing gas is gaseous oxygen, and **in that** the oxygen-containing gas supply means (12) are positioned in a surface layer (23) of the body of water (2), in a vicinity of a culture media (14) present in said surface layer (23) of the body of water (2).

4. The system (1) of claim 2, **characterized in that** the oxygen-containing gas is compressed air, and **in that** the oxygen-containing gas supply means (13) are positioned in a layer (22) of the body of water (2) which is located between a surface layer (23) and the bottom layer (21).

5. The system of claim 1, **characterized in that** the oxygen-containing gas generation subsystem (4) is a first gas generation subsystem (42) that generates a first gas, the first gas being gaseous oxygen; wherein the system (1) additionally comprises:
an oxygen gas outlet operatively connected to the first gas generation subsystem (42);
a gaseous oxygen supply line (10) operatively connected to the gaseous oxygen outlet;
gaseous oxygen supply means (12) operatively connected with the gaseous oxygen supply line (10);
- a second subsystem (43) for generating a second oxygen-containing gas, wherein said second gas is compressed air;
a compressed air outlet operatively connected to the second gas generation subsystem (43);
a compressed air supply line (11) operatively connected to the compressed air outlet; and
compressed air supply means (13) operatively connected to the compressed air supply line (11);
wherein the oxygen supply means (12) are positioned in a first depth of the body of water (2); and
wherein the compressed air supply means (13) are positioned in a second depth of the body of water (2).

6. The system (1) of claim 5, **characterized in that** the oxygen supply means (12) are positioned in a surface layer (23) of the body of water (2), in a vicinity of a culture medium (14) present in said surface layer (23) of the body of water (2).

7. The system (1) of claim 5, **characterized in that** it comprises a plurality of oxygen supply means (12), each operatively connected to the gaseous oxygen supply line (10) and positioned at a corresponding depth in the body of water (2).

8. The system (1) of claim 5, **characterized in that** it comprises a plurality of compressed air supply means (13), each operatively connected to the compressed air supply line (11) and positioned at a corresponding depth in the body of water (2).

9. The system (1) of claim 5, **characterized in that** it comprises:
- a plurality of oxygen supply means (12), each operatively connected to the gaseous oxygen supply line (10) and positioned at a corresponding depth in the body of water (2); and
- a plurality of compressed air supply means (13), each operatively connected to the compressed air supply line (11) and positioned at a corresponding depth in the body of water (2).

10. The system (1) of claim 1, **characterized in that** the gas generation subsystem (4) is configured to generate the oxygen-containing gas with an oxygen concentration greater than 80 % by weight.

11. The system of claim 1, **characterized in that** the mixing and dissolving means (7) comprise a Venturi tube (74) having a corresponding water inlet operatively connected with the water inlet (72) of the mixing and dissolving means (7), a corresponding gas inlet operatively connected with the gas inlet (71) of the mixing and dissolving means (7), and a corresponding gas-mixed water outlet.

12. The system (1) of claim 11, **characterized in that** the mixing and dissolving means (7) additionally comprise a dilution cone (75) operatively connected downstream of the corresponding gas-mixed water outlet of the Venturi tube (74).

13. The system (1) of claim 11, **characterized in that** the mixing and dissolving means (7) additionally comprise a water bypass line (76) directly connecting the corresponding water inlet of the Venturi tube (74) with the corresponding gas-mixed water outlet of the Venturi tube (74).

14. The system (1) of claim 13, **characterized in that** the mixing and dissolving means (7) additionally comprise a regulating valve (77) configured to control a flow rate of water flowing through the water bypass line (76).

15. The system (1) of claim 1, **characterized in that** the autonomous electricity supply subsystem (5) has a source of electricity that is selected from the group consisting of generators, solar panels and/or batteries, as well as a combination thereof.

16. The system (1) of claim 1, **characterized in that** it additionally comprises oxygen-containing gas storage means (15) operatively connected between the gas outlet (41) of the gas generation subsystem (4) and the gas inlet (71) of the mixing and dissolving means (7).

17. The system (1) of claim 1, **characterized in that** it comprises at least one current meter (16) operatively connected with the control means (6) and positioned within a vicinity of the floating platform (3), wherein the control means (6) are further configured to receive at least one water current direction and velocity measurement from said at least one current meter (16), and to control the oxygen supply in response to said water current direction and velocity measurement.

18. The system (1) of claim 1, **characterized in that** it comprises at least one oxygen sensor (17) operatively connected with the control means (6) and positioned within a vicinity of the floating platform (3), wherein the control means (6) are further configured to receive at least one oxygen measurement from said at least one oxygen sensor (17) and to control the oxygen supply in response to said oxygen measurement.

19. The system (1) of claim 1, **characterized in that** each of said anchoring supports (98a, 98b) can have at least two positions, one deployed and one retracted.

20. The system (1) of claim 1, **characterized in that** the oxygen-containing gas is selected from the group consisting of gaseous oxygen and air, as well as a combination thereof.

21. The system (1) of claim 1, **characterized in that** it additionally comprises at least one safety valve for emergency shutdowns of the oxygen-containing gas and/or water and gas mixture.

22. A method for autonomously generating and supplying oxygen to a bottom layer (21) of a body of water (2), at remote locations and avoiding resuspension of sediment from a bottom (24) of the body of water (2), **characterized in that** it comprises the steps of:
- providing an autonomous oxygen generation and supply system (1) comprising: a floating platform (3), wherein said floating platform (3) contains: a subsystem for generating a gas (4) containing oxygen; an autonomous electricity supply subsystem (5) operatively connected to the gas generation subsystem (4); and control means (6) operatively connected to the gas generation subsystem (4) and the autonomous electricity supply subsystem (5), means for mixing and dissolving (7) the oxygen-containing gas in water, having a gas inlet (71) operatively connected to a gas outlet (41) of the gas generation subsystem (4), a water inlet (72) operatively connected to a water source, and a gas-mixed water outlet (73); wherein the control means (6) are additionally operatively connected to the gas mixing and dissolving means (7); a supply line (8) of gas-mixed water operatively connected to the gas-mixed water outlet (72) of the mixing and dissolving means (7), said supply line (8) extending from the floating platform (3) to the bottom layer (21) of the body of water (2); and gas-mixed water supply means (9) operatively connected to the supply line (8); the gas-mixed water supply means (9) comprise at least one diffuser (91), wherein said diffuser (91) comprises a central body (92) having a gas-mixed water inlet (93) and a plurality of gas-mixed water outlets (94a, 94b) in fluid communication with said gas-mixed water inlet (93); a plurality of radial lines (95a, 95b), wherein each of said radial lines (95a, 95b) is connected in fluid communication with a corresponding gas-mixed water outlet (94a, 94b) of said central body (92); a plurality of perforations (97) distributed longitudinally along said radial lines (95a, 95b), said plurality of perforations facing an outward direction with respect to said central body (92);
generating the oxygen-containing gas by means of the gas generation subsystem (4); generating a mixture of water with the oxygen-containing gas using the mixing and dissolving means (7); and
supplying gas-mixed water using the supply means (9), wherein said supply means (9) provide a laminar flow of gas-mixed water in the bottom layer (21) of the body of water (2), preventing resuspension of sediment from the bottom (24) of the body of water (2).

23. The method of claim 22, **characterized in that** it additionally comprises:
providing the system with the oxygen-containing gas generation subsystem being a first gas generation subsystem that generates a first gas, the first gas being gaseous oxygen;
further providing the system with: a second subsystem for generating a second oxygen-containing gas, wherein said second gas is compressed air; a gaseous oxygen outlet operatively connected with the first gas generation subsystem; a gaseous oxygen supply line operatively connected with the gaseous oxygen outlet; a plurality of oxygen supply means, each operatively connected with the gaseous oxygen supply line and positioned at a corresponding depth in the body of water; a compressed air outlet operatively connected with the second gas generation subsystem; a compressed air supply line operatively connected with the compressed air outlet; and a plurality of compressed air supply means, each operatively connected with the compressed air supply line and positioned at a corresponding depth in the body of water;
supplying gaseous oxygen at different depths in the body of water using said plurality of oxygen supply means; and
supplying compressed air to different depths in the body of water using said plurality of compressed air supply means.

24. Use of an autonomous oxygen generation and supply system (1) according to claim 9, **characterized in that** it serves to supply oxygen and/or air to different depths of the body of water (2).
